# EUROPÄISCHE PATENTSCHRIFT

(11) **EP 2 598 839 B1**
(45) Veröffentlichungstag und Bekanntmachung des Hinweises auf die Patenterteilung: **16.07.2014**
(21) Anmeldenummer: 11724397.2
(22) Anmeldetag: 30.05.2011
(51) Int. Cl.: G01C 11/02, G01C 15/00, G01C 3/08

(54) **PARALLELE ONLINE-OFFLINE REKONSTRUKTION FÜR DREI-DIMENSIONALE RAUMVERMESSUNG**
PARALLEL ONLINE-OFFLINE RECONSTRUCTION FOR THREE-DIMENSIONAL SPACE MEASUREMENT
RECONSTRUCTION PARALLÈLE EN LIGNE/HORS LIGNE POUR MESURAGE TRIDIMENSIONNEL

(30) Priorität: 28.07.2010 DE 102010038507
(43) Veröffentlichungstag der Anmeldung: 05.06.2013
(73) Patentinhaber: Robert Bosch GmbH, 70442 Stuttgart (DE)
(72) Erfinder: ROLAND, Matthias, 30451 Hannover (DE); JACKISCH, Sebastian, 71638 Ludwigsburg (DE); FIETZ, Alexander, 71334 Waiblingen (DE); PITZER, Benjamin, Menlo Park 94025 (CA)
(86) Internationale Anmeldenummer: PCT/EP2011/058792
(87) Internationale Veröffentlichungsnummer: WO 2012/013388

(56) Entgegenhaltungen:
- DE-A1- 4 119 180
- DE-A1-102006 054 324
- DE-A1-102008 054 453

## Beschreibung

Die vorliegende Erfindung betrifft eine Messvorrichtung und ein Messsystem zur automatischen drei-dimensionalen Vermessung eines Raumes. Ferner betrifft die Erfindung ein entsprechendes Verfahren, ein Computerprogrammelement, das das Verfahren ausführen kann, wenn es auf einem Prozessor ausgeführt wird und ein computerlesbares Medium, auf dem das Programmelement gespeichert ist.

### Stand der Technik

Eine drei-dimensionale Vermessung von Räumen ist von großem Interesse z.B. für Handwerker und Architekten, um möglichst schnell einen "Ist-Zustand" von Räumen zu erfassen und beispielsweise anstehende Arbeiten, wie den Einbau von Küchen, Einbau von Fenstern und Malerarbeiten planen zu können.

Messsysteme und Verfahren zur Vermessung von Räumen und/oder Objekten mit Hilfe von Videoaufnahmen sind beispielsweise aus den Druckschriften DE 102 008 054 453 DE 102 006 054 324 und DE 4 119 180 bekannt.

Bei der Durchführung einer Vermessung nimmt z.B. ein Nutzer mit einem Gerät Einzelansichten des Raumes auf, aus denen eine drei-dimensionale Rekonstruktion des Raumes erzeugt werden kann. Allerdings hängt die Qualität der Rekonstruktion von der geometrischen Anordnung der Einzelaufnahmen im Raum ab. Für eine optimale Anordnung der Einzelansichten ist algorithmisches Expertenwissen des Nutzers erforderlich.

### Offenbarung der Erfindung

Es kann daher als eine Aufgabe der vorliegenden Erfindung angesehen werden, eine verbesserte Vorrichtung und ein Verfahren bereitzustellen, welche eine qualitativ hochwertigere drei-dimensionale Rekonstruktion eines Raumes ermöglichen.

Diese Aufgabe kann durch den Gegenstand der vorliegenden Erfindung gemäß den unabhängigen Ansprüchen gelöst werden. Vorteilhafte Ausführungsformen der vorliegenden Erfindung sind in den abhängigen Ansprüchen beschrieben.

Im Folgenden werden Merkmale, Einzelheiten und mögliche Vorteile einer Vorrichtung gemäß Ausführungsformen der Erfindung im Detail diskutiert.

Gemäß einem ersten Aspekt der vorliegenden Erfindung wird eine Messvorrichtung zur automatischen drei-dimensionalen Vermessung eines Raumes beschrieben. Die Messvorrichtung weist eine Kamerasensoranordnung auf, die ausgestaltet ist, niedrigauflösende Videoaufnahmen und hochauflösende Bilder zu generieren. Die hochauflösenden Bilder werden automatisch, basierend auf einer drei-dimensionalen Echtzeit-Rekonstruktion der Videoaufnahmen an geometrisch geeigneten Positionen im Raum erzeugt.

Die automatische Aufnahme der hochaüflösenden Bilder kann ohne die Notwendigkeit eines Zutuns eines Benutzers geschehen. Beispielsweise wird die automatische Aufnahme durch eine mit der Messvorrichtung direkt oder drahtlos verbundene Steuer- oder Recheneinheit ausgelöst. Die automatische Aufnahme kann ein Auslösen des Kamerasensors und ggf. ein Speichern der Daten umfassen. Alternativ kann die automatische Aufnahme ein Abrufen bestimmter Daten aus einem Speicher bedeuten.

Die Kamerasensoranordnung kann zum Beispiel einen hochauflösenden Sensor aufweisen, der hochauflösende Bilder erzeugt. Für die Erzeugung der niedrigauflösenden Videoaufnahmen können die hochauflösenden Bilder beispielsweise herunterskaliert werden. Hierzu kann die Kameraanordnung einen Kamerasensor aufweisen, der schnell zwischen niedrigauflösendem Livebild und hochauflösender Einzelaufnahme wechseln kann. Die hochauflösenden Einzelaufnahmen können gespeichert bwz. zwischengespeichert und runterskaliert werden. Die runterskalierten Aufnahmen können für eine drei-dimensionale EchtzeitRekonstruktion verwendet werden. Die in einem Speicher bzw. Zwischenspeicher befindlichen hochauflösenden Einzelaufnahmen können für eine spätere oder gleichzeitige qualitativ hochwertige Rekonstruktion wieder abgerufen werden.

Alternativ kann die Kamerasensoranordnung einen ersten und einen zweiten Kamerasensor aufweisen. Der erste Kamerasensor kann eine hochauflösende Kamera und der zweite Kamerasensor eine videofähige Kamera sein.

Die Videoaufnahmen haben eine geringere Auslösung als die hochauflösenden Bilder. Die niedrige Auflösung kann sich beispielsweise auf räumliche Details beziehen. Die niedrige Auflösung hat zur Folge, dass die Datengröße der Videoaufnahmen geringer ist als die der hochauflösenden Bilder. Aufgrund der geringeren Datengröße können die Videoaufnahmen live, das heißt in Echtzeit, verarbeitet werden. Die Verarbeitung kann online stattfinden, das heißt, die Daten müssen nicht zwischengespeichert werden, und die Verarbeitungsergebnisse, also die drei-dimensionale Echtzeit-Rekonstruktion, kann als direktes Feedback an einen Nutzer weitergeleitet werden. Die niedrige Auflösung kann räumlich verstanden werden. Die zeitliche Auflösung der Videoaufnahmen kann dabei hoch sein z.B. können die Videoaufnahmen live mit einer hohen Frame-Rate aufgenommen werden.

Aus der Echtzeit-Rekonstruktion des Raumes können Positionen im Raum ermittelt werden, die geometrisch geeignet sind; hochauflösende Bilder aufzunehmen. Die geometrisch geeigneten Positionen können an Hand von Landmarken in den niedrigauflösenden Videoaufnahmen bestimmt werden. Die hochauflösenden Bilder haben eine hohe Qualität und eine größere Datengröße als die Videoaufnahmen. Sie können Einzelaufnahmen an den geeigneten geometrischen Positionen im Raum darstellen.

Gemäß einem Ausführungsbeispiel weist die Messvorrichtung ferner eine Ausgabeeinheit auf, die die drei-dimensionale Echtzeit-Rekonstruktion ausgeben kann. Hierdurch kann ein Feedback an den Nutzer und eine kontinuierliche Nutzerführung zu den geeigneten geometrischen Positionen im Raum, die für die Aufnahme der hochauflösenden Bilder geeignet sind, realisiert werden. Die Ausgabeeinheit kann beispielsweise als Display ausgestaltet sein.

Gemäß einem zweiten Aspekt der vorliegenden Erfindung wird ein Messsystem zur automatischen drei-dimensionalen Vermessung eines Raumes beschrieben. Das Messsystem weist die oben dargestellte Messvorrichtung und eine Recheneinheit auf.

Die Recheneinheit kann beispielsweise ein Laptop, ein Personal Digital Assistant (PDA) oder ein Tablet-PC sein. Ferner kann die Recheneinheit drahtlos, das heißt zum Beispiel mit Hilfe von elektromagnetischen Signalen, zum Beispiel via Bluetooth oder WLAN mit der Messvorrichtung verbunden sein. Alternativ kann die Recheneinheit direkt in die Messvorrichtung integriert sein.

Die durch die Kamerasensoranordnung aufgenommenen niedrigauflösenden Videoaufnahmen werden direkt online an die Recheneinheit geleitet. Basierend auf diesen Videoaufnahmen erzeugt die Recheneinheit in Echtzeit eine drei-dimensionale Rekonstruktion des Raumes. Ferner ist die Recheneinheit ausgestaltet, ausgehend von der drei-dimensionalen Echtzeitrekonstruktion, Positionen im Raum festzulegen, an denen hochauflösende Bilder aufgenommen werden sollen. Die Ermittlung der geeigneten Positionen basiert auf einer drei-dimensionalen Algorithmik und findet ebenfalls in Echtzeit parallel zur Aufnahme der Videobilder und parallel zur drei-dimensionalen Echtzeit-Rekonstruktion statt. Ferner ist die Recheneinheit ausgestaltet, eine automatische Aufnahme der hochauflösenden Bilder durch die Kamerasensoranordnung auszulösen.

Gemäß einem Ausführungsbeispiel ist die Recheneinheit ferner ausgestaltet, im Anschluss an eine Aufnahme der hochauflösenden Bilder eine zweite drei-dimensionale Rekonstruktion basierend auf diesen zu erzeugen. Hierfür können die hochauflösenden Bilder nach ihrer Aufnahme gespeichert werden. Damit kann die zweite drei-dimensionale Rekonstruktion offline, das heißt nicht in Echtzeit, stattfinden. Dies kann vorteilhaft sein, da die Verarbeitung der hochauflösendern Bilder, die eine große Datengröße haben, zeitaufwendig sein kann. Alternativ kann die zweite drei-dimensionale Rekonstruktion parallel zur EchtzeitRekonstruktion stattfinden. Die zweite drei-dimensionale Rekonstruktion ist genauer d.h. zum Beispiel detailreicher und realitätsnäher als die EchtzeitRekonstruktion.

Gemäß einem dritten Aspekt der vorliegenden Erfindung wird ein Verfahren zur automatischen drei-dimensionalen Vermessung eines Raumes beschrieben. Das Verfahren eignet sich zum Betreiben bzw. Steuern des oben beschriebenen Messsystems.

Gemäß einem vierten Aspekt der vorliegenden Erfindung wird ein Computerprogrammelement beschrieben, welches ausgestaltet ist, das oben beschriebene Verfahren auszuführen, wenn es auf einem Prozessor ausgeführt wird.

Gemäß einem fünften Aspekt der vorliegenden Erfindung wird ein computerlesbares Medium beschrieben, auf dem das oben genannte Computerprogrammelement gespeichert ist.

Die erfindungsgemäße Messvorrichtung, das Messsystem und das erfindungsgemäße Verfahren haben die folgenden Vorteile: Eine sehr genaue qualitativ hochwertige drei-dimensionale Rekonstruktion eines zu vermessenden Raumes wird ermöglicht. Die Rekonstruktion findet vollautomatisch statt, wodurch die Genauigkeit und Robustheit erhöht wird, da nicht mehr auf Nutzerwissen zurückgegriffen werden muss. Ferner wird eine Nutzerführung in Echtzeit ermöglicht. Somit ist eine Nutzung des Systems auch ohne Expertenwissen über drei-dimensionale Rekonstruktionen möglich. Durch die Echtzeit-Rekonstruktion basierend auf den Videoaufnahmen ergibt sich ferner ein geringerer Zeitaufwand bei der Erfassung.

Durch den parallelen Ablauf mehrerer Prozesse, nämlich die Aufnahme von Videobildern, die Erzeugung der drei-dimensionalen Echtzeit-Rekonstruktion und die Aufnahme der hochauflösenden Bilder kann eine vollautomatische Integration späterer Aufnahmen in vorherige qualitativ hochwertige drei-dimensionale Rekonstruktionen und eine Verfeinerung der initial bestimmten Raumgeometrie ermöglicht werden. Ferner können nachträglich auch vollautomatisch weitere Sensordaten, wie zum Beispiel Far-Infra-Red- (FIR), Radar-, Terahertz- (THz), Röntgen- und Wallscanner-Daten in das bestehende drei-dimensional Raummodell integriert werden.

Des Weiteren wird eine leicht verständliche Live-Visualisierung ermöglicht. Ferner werden die gewonnenen Messergebnisse in Echtzeit in räumlichen Zusammenhang für den Benutzer gebracht.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.
- Fig. 1: zeigt schematisch eine Vorder- und Hinteransicht eines Messsystems zur automatischen drei-dimensionalen Raumvermessung gemäß einem Ausführungsbeispiel der Erfindung
- Fig. 2: zeigt schematisch eine Draufsicht auf einen zu vermessenden Raum mit Aufnahmepositionen und Rekonstruktionsergebnissen gemäß einem Ausführungsbeispiel der Erfindung
- Fig. 3: zeigt schematisch eine Echtzeit-Rekonstruktion und Nutzerführung gemäß einem Ausführungsbeispiel der Erfindung

Alle Figuren sind lediglich schematische Darstellungen erfindungsgemäßer Vorrichtungen bzw. ihrer Bestandteile und der entsprechenden Verfahrensschritte. Insbesondere Abstände und Größenrelationen sind in den Figuren nicht maßstabsgetreu wiedergegeben. In den verschiedenen Figuren sind sich entsprechende Elemente mit den gleichen Referenznummern versehen.

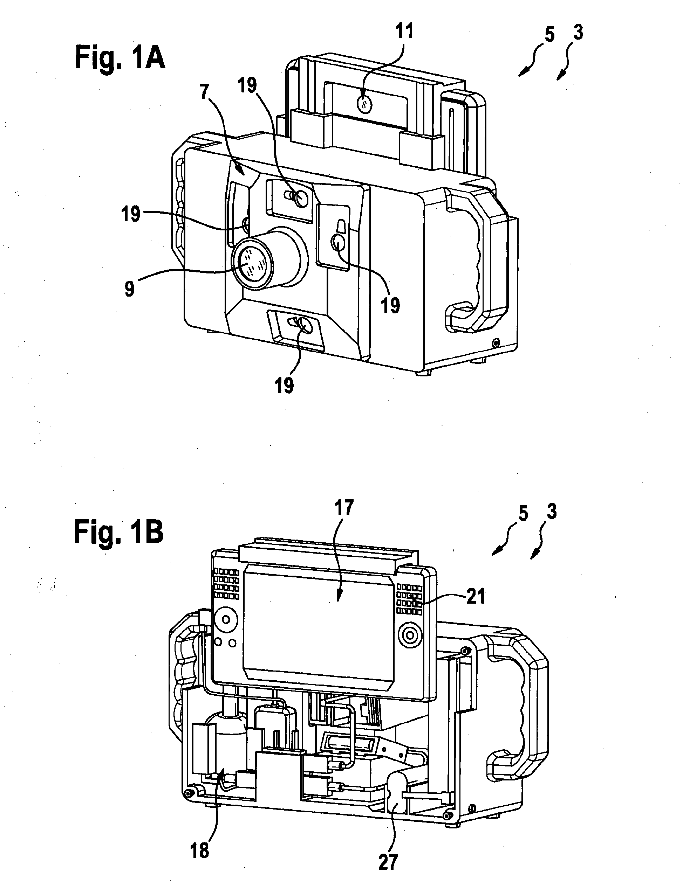

In Fig. 1 ist eine Messvorrichtung und ein Messsystem zur automatischen drei-dimensionalen Raumvermessung gemäß einem Ausführungsbeispiel der Erfindung dargestellt. Fig. 1A zeigt die Vorderansicht des Messsystems und Fig. 1B die Hinteransicht. Mit der Messvorrichtung wird ein Konzept zur vollautomatischen Aufnahme von geeigneten hochauflösenden Einzelansichten bereitgestellt und eine kontinuierliche Nutzerführung in Echtzeit durch den zu rekonstruierenden Innenraum ermöglicht.

Gemäß dem Ausführungsbeispiel weist das Messsystem 5 eine Kameraanordnung 7 auf. Diese besteht aus einem ersten Kamerasensor 9 und einem zweiten Kamerasensor 11. Der zweite Kamerasensor 11 ist als videofähige Kamera ausgestaltet und der erste Kamerasensor 9 ist als hochauflösende Kamera ausgestaltet.

Die Messvorrichtung 3 bzw. das Messsystem 5 weisen ferner Positionsmessvorrichtungen 18, 19 auf. Auf der Vorderseite der Messvorrichtung 3 sind die Positionsmessvorrichtungen 18 als mehrere relativ zur Kamera kalibrierte einstrahlige Laserentfernungsmesser 18 ausgestaltet. Auf der Rückseite der Messvorrichtung 3 in Fig. 1B sind die Positionsmessvorrichtungen 19 als kinematische Sensoren 19, wie zum Beispiel Beschleunigungs-, Drehraten- und/oder Lagesensoren ausgestaltet. Die Positionsmessvorrichtungen 18, 19 können Daten liefern, die die Bestimmung der Position der Messvorrichtung 3 im Raum, wie zum Beispiel x-, y- und z-Koordinaten, ermöglichen. Ferner können die Positionsmessvorrichtungen 18, 19 Daten liefern, die eine Bestimmung der Orientierung der Messvorrichtung, wie z.B. Neigungswinkel in Bezug auf Horizontale und Vertikale, ermöglichen.

Insbesondere können Entfernungsmessungs-Daten beispielsweise mit Hilfe des Laserentfernungsmessers 18 für eine metrische Skalierung von hochauflösenden Bildern verwendet werden. Ferner können diese Daten für die drei-dimensionale Echtzeit-Rekonstruktion 23 und für die zweite genaue Rekonstruktion 25 verwendet werden.

Ferner können die mit Hilfe von kinematischen Sensoren 19 ermittelte Daten beispielsweise für eine Vorabausrichtung des Koordinatensystems der Messvorrichtung 3 verwendet werden.

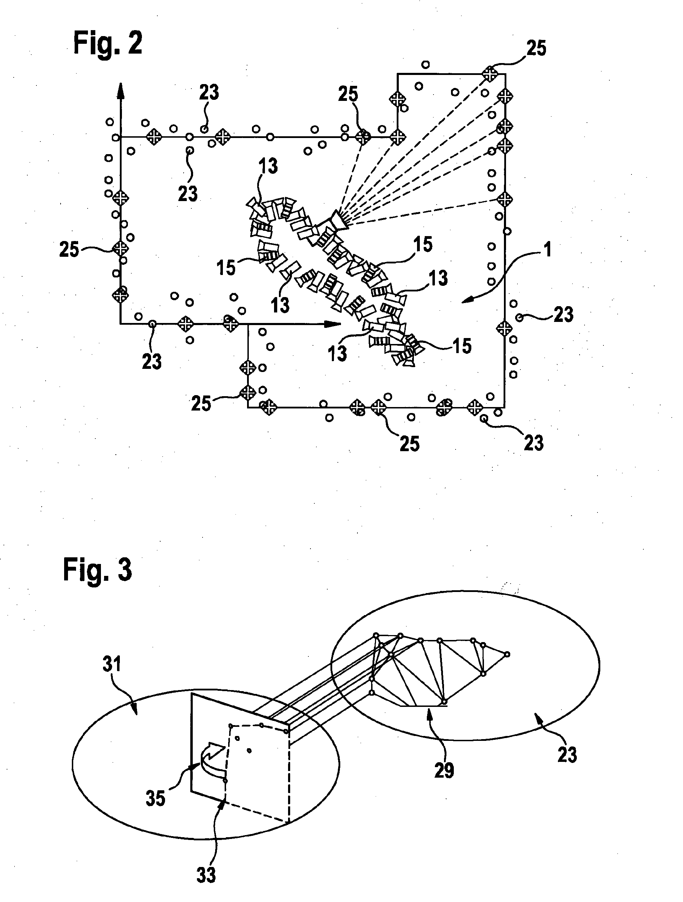

Die Messvorrichtung weist ferner eine Ausgabeeinheit 17 auf. Diese ist auf der dem Nutzer zugewandten Seite angeordnet und beispielsweise als Display ausgestaltet, das ein Livebild der Videokamera und eine hierzu überlagerte EchtzeitRekonstruktion des Raumes anzeigen kann. Wie in Fig. 3 dargestellt, kann auf der Ausgabeeinheit 17 eine Nutzerführung 35 realisiert werden, indem Videoaufnahmen 31 und Echtzeit-Rekonstruktionen 23 überlagert werden.

Das Messsystem 5 ist ferner mit einer Recheneinheit 21 ausgestattet. Im dargestellten Ausführungsbeispiel ist die Recheneinheit 21 direkt in das System integriert. Alternativ könnte die Recheneinheit ein externes Gerät sein, wie zum Beispiel ein Laptop oder ein PDA, welcher beispielsweise drahtlos mit der Messvorrichtung 3 verbunden ist. Die Messvorrichtung 3 weist ferner ein Gehäuse, geeignete seitliche Handgriffe und eine Energiequelle 27 wie beispielsweise einen Akku auf. Das Messsystem 5 und die Messvorrichtung 3 können handgeführte Geräte sein und gegebenenfalls in Handwerkzeuge integriert werden.

In Fig. 2 ist schematisch eine Draufsicht auf einen zu vermessenden Raum mit Aufnahmepositionen und Rekonstruktionsergebnissen gemäß einem Ausführungsbeispiel der Erfindung dargestellt. Zum Zwecke der Raumvermessung kann ein Nutzer mit der Messvorrichtung 3 den Raum 1 betreten und die Vermessung beispielsweise durch Einschalten der Kamera 9, 11 initialisieren. Alternativ kann die Initialisierung folgendermaßen stattfinden: Für die Definition eines intuitiven Koordinatensystems kann das Messsystem 5 bzw. die Messvorrichtung 3 mit einer Aufnahme in eine Raumecke, die anschließend das räumliche Koordinatensystem einer drei-dimensionalen Rekonstruktion darstellt, initialisiert werden. Die Initialisierung einer groben Echtzeit-Lokalisierung des Messsystems 3 kann mit Hilfe einer sich mit der ersten Aufnahme überlappenden Aufnahme realisiert werden.

Nach dem Start der Vermessung kann der Benutzer sich mit der Messvorrichtung 3 durch den Raum 1 bewegen. Beispielsweise kann er sich mit dem Rücken zur Wand entlang des Raumes bewegen. Nach dem Initialisieren der Vermessung werden durch den zweiten Kamerasensor 11 automatisch niedrigauflösende Live-Videobilder aufgenommen. Diese können direkt auf der Rückseite der Messvorrichtung 3 an der Ausgabeeinheit 17 vom Benutzer gesehen werden. Die Live-Videoaufnahmen werden an die Recheneinheit 21 übermittelt. Dort wird eine drei-dimensionale Echtzeit-Rekonstruktion des Raumes in Echtzeit erstellt. Die Echtzeit-Rekonstruktion 23 kann, wie in Figur 3 gezeigt, in das Livebild des zweiten Kamerasensors 11 auf der Ausgabeeinheit 17 projiziert werden. Beispielsweise kann die Echtzeit-Rekonstruktion 23 mit der Videoaufnahme 31 halbtransparent überlagert werden. Hierdurch erhält der Nutzer online, also in Echtzeit, ein Feedback über den Status der Rekonstruktion.

Die im Rahmen der Echtzeit-Rekonstruktion 23 berechneten Raumpunkte sind in Fig. 2 als Kreise dargestellt. Die auf den Videoaufnahmen basierende EchtzeitRekonstruktion 23 stellt eine grobe Näherung dar, was aus der Abweichung der Punkte 23 von den tatsächlichen Raumbegrenzungen ersichtlich ist.

Die Recheneinheit 21 bestimmt geometrisch geeignete Positionen 15 im Raum, die für eine Aufnahme einer hochauflösenden Einzelansicht mit Hilfe des ersten Kamerasensors 9 geeignet sind.

Die hochauflösenden Aufnahmen sind für eine qualitativ hochwertige und genaue drei-dimensionale Rekonstruktion 25 geeignet. In Fig. 2 ist die zweite drei-dimensionale Rekonstruktion 25 durch Kreuze dargestellt. Die Genauigkeit der Rekonstruktion ist daraus ersichtlich, dass die Kreuze direkt auf den Raumabgrenzungen liegen. Die geometrisch geeigneten Positionen 15 der Messvorrichtung 3 im Raum 1 sind durch gestreifte Kameras angedeutet.

Die Recheneinheit 21 initiiert die automatische Aufnahme der hochauflösenden Bilder durch den ersten Kamerasensor 9. Die hochauflösenden Einzelansichten können zur Verfeinerung der Echtzeit-Rekonstruktion in einem Nachverarbeitungsschritt verwendet werden. Durch Daten betreffend die Position und die Orientierung des Messsystems zum Zeitpunkt der Aufnahme kann die Nachverarbeitung beispielsweise in ihrer Robustheit und Geschwindigkeit verbessert werden. Diese Daten und Informationen können mit Hilfe der Positiönsmessvorrichtungen 18, 19 bereitgestellt werden. Die Laserentfernungsmesser 18 können ausgestaltet sein, zu den Videoaufnahmen und auch zu den hochauflösenden Bildern jeweils zu zumindest einem Referenzpunkt im Raum eine Entfernung zu bestimmen. Die Bestimmung der aktuellen Position der Messvorrichtung kann dabei in Bezug auf Referenzpunkte bzw. Landmarken in den Videoaufnahmen stattfinden. Landmarken können dabei beispielsweise markante Merkmalpunkte, wie beispielsweise Türrahmen oder Steckdosen in den jeweiligen Aufnahmen sein. Basierend auf der Entfernungsmessung können beispielsweise die drei-dimensionale Echtzeit-Rekonstruktion und/oder die hochgenaue zweite drei-dimensionale Rekonstruktion metrisch skaliert, d.h. mit einem Maßstab versehen werden. Somit können die Daten der Entfernungsmessungen bei der drei-dimensionalen Rekonstruktion bzw. Modelierung eingesetzt werden.

Ferner berechnet die Recheneinheit eine zweite genaue drei-dimensionale Rekonstruktion basierend auf den hochauflösenden Bildern. Diese Berechnung kann beispielsweise offline stattfinden. Hierzu können die hochauflösenden Bilder gespeichert werden. Alternativ kann die Echtzeit-Nutzerführung über Videodaten mit der genauen drei-dimensionalen Rekonstruktion basierend auf den hochauflösenden Einzelaufnahmen fusioniert werden. Die anschauliche Visualisierung der Messergebnisse, beispielsweise auf der Ausgabeeinheit 17, kann über Augmented Reality (erweiterte Realität-Techniken) verbessert werden.

Das Messsystem, welches eine Messung der drei-dimensionalen Geometrie eines Innenraums in Kombination mit einer echtzeitfähigen drei-dimensionalen Nutzerführung realisiert, kann mehrere parallel ablaufende Arbeitsprozesse ausführen. Ein grobes Echtzeit-Tracking des Messsystems über die videofähige Kamera 11, gegebenenfalls unterstützt durch Inertial- bzw. kinematische Sensoren 19 und automatische Aufnahme von geometrisch geeigneten hochauflösenden Einzelansichten mit der Kamera 9 läuft parallel zu einer groben drei-dimensionalen Echtzeit-Rekonstruktion 23 der Raumgeometrie, über die das Messsystem online lokalisiert werden kann. Ein weiterer Arbeitsschritt, nämlich die hochgenaue drei-dimensionale Rekonstruktion 25, basierend auf den automatisch erzeugten Einzelansichten und den zur Verfügung stehenden a priori Informationen über die grobe Position und Orientierung des Messsystems 3 zum Zeitpunkt der Einzelaufnahme kann ebenfalls parallel oder anschließend an die zuvor genannten Arbeitsschritte ablaufen.

Im Einzelnen läuft das Echtzeit-Tracking und die Aufnahme der hochauflösenden Einzelaufnahmen mit den folgenden Schritten ab: Detektion einfacher natürlicher Landmarken in den Aufnahmen; Suche nach korrespondierenden Punkten in einer sich permanent aktualisierenden Initialrekonstruktion; Bestimmung der aktuellen Messsystemposition und Orientierung über korrespondierende Merkmale in aktuellen Frames der Initialrekonstruktion; Bestimmung von geeigneten Frames für die grobe drei-dimensionale Echtzeit-Rekonstruktion 23 und Weiterleitung dieser Frames an einen zweiten Arbeitsschritt; Bestimmung von guten geometrischen Bedingungen für hochauflösende Einzelaufnahmen und Auslösen der hochauflösender Kamera 9 mit anschließender Weiterleitung dieser Einzelaufnahmen und der dazugehörigen Kamerapositionen an einen dritten Arbeitsschritt. Der parallel ablaufende Arbeitsschritt der groben Echtzeit-Rekonstruktion 23 kann im Einzelnen folgende Schritte aufweisen: Bearbeitung der Frames vom Echtzeit-Trackingsystem; Integration natürlicher Landmarken in diese Frames in die bestehende Initialrekonstruktion; Update der Initialrekonstruktion über lokale und schnelle Optimierungsmethoden.

Der weitere parallel oder alternativ anschließend ablaufende Arbeitsschritt der hochgenauen zweiten drei-dimensionalen Rekonstruktion 25 auf Basis der Einzelaufnahmen kann folgende Schritte umfassen: Detektion komplexer und sehr genauer natürlicher Landmarken in den hochauflösenden Einzelaufnahmen; optionale Detektion von natürlichen Kantenmerkmalen, um texturschwache Bereiche auch mit Bildmerkmalen versehen zu können; Bestimmung korrespondierender Merkmale zwischen den Einzelaufnahmen unter Einschränkung des Suchraums durch a priori Positionsinformation aus dem ersten Arbeitsschritt, wodurch die Robustheit und Auswertungsgeschwindigkeit erhöht werden können; automatische drei-dimensionale Rekonstruktion 25 der korrespondierenden Bildmerkmale zu hochgenauer drei-dimensionaler Punktlinienwolke; drei-dimensionale Modellierung der hochgenauen drei-dimensionalen Rekonstruktion und der optional integrierten Lasermessungen zu einem drei-dimensionalen CAD-Raummodell.

In Fig. 3 ist schematisch eine Echtzeit-Rekonstruktion und die Nutzerführung gemäß einem Ausführungsbeispiel der Erfindung dargestellt. In der rechten Ellipse ist schematisch eine Echtzeit-Rekonstruktion 23, die online stattfindet, angedeutet. Hierzu kann beispielsweise ein trianguliertes drei-dimensionales Netz (Mesh) 29 modelliert werden. In der linken Ellipse ist das Livebild der Videoaufnahme 31 angedeutet. Die drei-dimensionale Echtzeit-Rekonstruktion 23 kann in das zwei-dimensionale Bild der Videoaufnahme 31 projiziert werden. Diese Projektion kann beispielsweise halbtransparent mit dem Livebild der Videoaufnahme 31 überlagert werden. Die überlagerung ist mit der Referenznummer 33 angedeutet. Die Nutzerführung 35 ist mit einem Pfeil angedeutet.

Durch die schnelle und grobe Echtzeit-Lokalisierung weiß das Messsystem zu jedem Zeitpunkt, wo im Innenraum es sich gerade befindet und wie gut die bisherige drei-dimensionale Rekonstruktion ist. Dem Nutzer kann so online zum einen die aktuelle Position visualisiert und ein Feedback über den bisherigen Status der Vermessung gegeben werden. Dies kann beispielsweise über eine Ampelfarbe, wie zum Beispiel grün für qualitativ hochwertige Echtzeit-Rekonstruktion, gelb für ungenaue Echtzeit-Rekonstruktion und rot für keine Echtzeit-Rekonstruktion geschehen. Alternativ kann der Nutzer durch Pfeile an die gewünschte Position gelotst werden. Durch die Online-Visualisierung kann der Nutzer einfach erkennen, welche Bereiche des Innenraums erfasst wurden und welche noch zu bearbeiten sind.

Wie in Fig. 3 gezeigt, kann die Nutzerführung durch eine Vermaschung der online rekonstruierten drei-dimensionalen Punktwolke weiter optimiert werden. Hierzu wird für die online erzeugte drei-dimensionalen Punktwolke direkt und ebenfalls in Echtzeit eine Triangulierung der Daten berechnet. Das so gewonnene drei-dimensionale Mesh der bisher rekonstruierten Bereiche lässt sich nun für jeden Zeitpunkt zurück in das Livebild der Kamera projizieren. Durch eine geschickte Visualisierung lassen sich die Bereiche im Bild kennzeichnen, für die schon eine drei-dimensionale Geometrie berechnet werden konnte. Zusätzlich unterstützende Bildinformationen, wie zum Beispiel der in Fig. 3 gezeigte Pfeil, können den Nutzer aktiv zu einer vollständigen Erfassung der Raumgeometrie führen.

Wird das Echtzeit-Tracking beispielsweise unterbrochen, ist eine Wiederaufnahme der Raumvermessung dadurch möglich, dass ein bereits aufgenommener Bereich des Innenraums erneut registriert wird. Dies ist mittels einer Speicherung der aufgenommenen Bilder und der daraus gewonnen Informationen folgendermaßen möglich: Der Nutzer bewegt beispielsweise die Messvorrichtung 3 so lange, bis bereits gespeicherte Landmarken in den Liveaufnahmen wiedergefunden werden und das System sich relokalisiert. Der Nutzer kann dann an dieser Stelle die Vermessung des Raums 1 weiterführen.

## Patentansprüche

1. Messvorrichtung (3) zur automatischen drei-dimensionalen Vermessung eines Raumes (1), die Messvorrichtung (3) aufweisend:
eine Kamerasensoranordnung (7);
wobei die Kamerasensoranordnung (7) ausgestaltet ist, niedrigauflösende Videoaufnahmen zu generieren;
wobei die Kamerasensoranordnung (7) ausgestaltet ist, automatisch an geometrisch geeigneten Positionen (15) im Raum hochauflösende Bilder zu generieren;
wobei die Messvorrichtung dazu ausgestaltet ist, für die automatische Aufnahme hochauflösender Bilder eine automatische Bestimmung der geometrisch geeigneten Positionen im Raum, basierend auf einer drei-dimensionalen Echtzeit-Rekonstruktion (23) der Videoaufnahmen durch zuführen.

2. Messvorrichtung (3) gemäß Anspruch 1, ferner aufweisend
eine Ausgabeeinheit (17);
wobei die Ausgabeeinheit (17) ausgestaltet ist die drei-dimensionale Echtzeit-Rekonstruktion (23) auszugeben, wodurch eine kontinuierliche Nutzerführung (35) in Echtzeit realisierbar ist.

3. Messvorrichtung (3) gemäß einem der Ansprüche 1 und 2, ferner aufweisend
eine Positionsmessvorrichtung (18, 19);
wobei die Positionsmessvorrichtung (18, 19) ausgestaltet ist, zu den Videoaufnahmen und zu den hochauflösenden Bildern jeweils zu mindestens einem Referenzpunkt im Raum eine Entfernung zu bestimmen.

4. Messsystem (5) zur automatischen drei-dimensionalen Vermessung eines
Raumes (1), das Messsystem (5) aufweisend:
eine Kamerasensoranordnung (7);
wobei die Kamerasensoranordnung (7) ausgestaltet ist, niedrigauflösende Videoaufnahmen zu generieren; wobei die Kamerasensoranordnung (7) ausgestaltet ist, automatisch an geometrisch geeigneten Positionen (15) im Raum hochauflösende Bilder zu generieren ;
eine Recheneinheit (21);
wobei die Recheneinheit (21) ausgestaltet ist, eine drei-dimensionale Echtzeit-Rekonstruktion (23) basierend auf den Videoaufnahmen zu erzeugen;
wobei die Recheneinheit (21) ausgestaltet ist, basierend auf der dreidimensionalen Echtzeit-Rekonstruktion (23), Positionen (15) im Raum zu bestimmen, die geometrisch für eine Aufnahme von einer drei-dimensionalen Rekonstruktion des Raumes zugrunde zu legenden Bildern geeignet sind;
wobei die Recheneinheit (21) ausgestaltet ist, eine automatische Aufnahme hochauflösender Bilder an den bestimmten Positionen (15) zu initiieren.

5. Messsystem (5) gemäß Anspruch 4,
wobei die Recheneinheit (21) ausgestaltet ist, eine zweite drei-dimensionale Rekonstruktion basierend auf den hochauflösenden Bildern zu erzeugen.

6. Verfahren zur automatischen drei-dimensionalen Vermessung eines Raumes (1), das Verfahren aufweisend die folgenden Schritte:
Generieren von niedrigäuflösenden Videoaufnahmen (31);
Erzeugen einer drei-dimensionalen Echtzeit-Rekonstruktion (23) basierend auf den niedrigauflösenden Videoaufnahmen (31);
Automatisches Bestimmen von Positionen (15) im Raum (1), die geometrisch für eine Aufnahme von einer drei-dimensionalen Rekonstruktion des Raumes zugrunde zu legenden Bildern geeignet sind, basierend auf der drei-dimensionalen Echtzeit-Rekonstruktion (23);
automatische Aufnahme hochauflösender Bilder an den bestimmten Positionen (15).

7. Verfahren gemäß Anspruch 6, ferner aufweisend
Ausgeben der drei-dimensionalen Echtzeit-Rekonstruktion (23) auf einer Ausgabeeinheit (17);
Führen eines Nutzers zu den für die Aufnahme hochauflösender Bilder bestimmten Postionen (15).

8. Verfahren gemäß einem der Ansprüche 6 und 7, ferner aufweisend Bestimmen einer aktuellen Position einer Messvorrichtung (3), mit der die niedrigauflösenden Videoaufnahmen (31) generiert werden, im Raum; Verwenden der aktuellen Position bei der drei-dimensionalen EchtzeitRekonstruktion (23);
wobei die Bestimmung der aktuellen Position der Messvorrichtung (3) in Bezug auf Referenzpunkte in den niedrigauflösenden Videoaufnahmen stattfindet.

9. Verfahren gemäß einem der Ansprüche 6 bis 8, ferner aufweisend Erzeugen einer zweiten drei-dimensionalen Rekonstruktion (25) basierend auf den hochauflösenden Bildern;
wobei die zweite drei-dimensionale Rekonstruktion (25) genauer ist als die drei-dimensionale Echtzeit-Rekonstruktion (23).

10. Computerprogrammelement,
wobei das Computerprogrammelement ausgestaltet ist, das Verfahren gemäß einem der Ansprüche 6 bis 9 auszuführen, wenn es auf einem Prozessor ausgeführt wird.

11. Computerlesbares Medium,
wobei auf dem Medium das Programmelement gemäß Anspruch 10 gespeichert ist.

## Claims

1. Measurement device (3) for automatic three-dimensional measurement of a space (1), said measurement device (3) having:
a camera sensor arrangement (7);
wherein the camera sensor arrangement (7) is designed to generate low-resolution video recordings;
wherein the camera sensor arrangement (7) is designed to generate high-resolution images automatically at geometrically suitable positions (15) in the space;
wherein the measurement device is designed to carry out an automatic determination of the geometrically suitable positions in the space, based on a three-dimensional real-time reconstruction (23) of the video recordings, for the automatic recording of high-resolution images.

2. Measurement device (3) according to Claim 1, furthermore having
an output unit (17);
wherein the output unit (17) is designed to output the three-dimensional real-time reconstruction (23), as a result of which continuous user guidance (35) can be realized in real-time.

3. Measurement device (3) according to one of Claims 1 and 2, furthermore having
a position measurement device (18, 19);
wherein, for the video recordings and for the high-resolution images, the position measurement device (18, 19) is designed to respectively determine a distance from at least one reference point in the space.

4. Measurement system (5) for automatic threedimensional measurement of a space (1), said measurement system (5) having:
a camera sensor arrangement (7); wherein the camera sensor arrangement (7) is designed to generate low-resolution video recordings;
wherein the camera sensor arrangement (7) is designed to automatically generate high-resolution images at geometrically suitable positions (15) in the space;
a computational unit (21);
wherein the computational unit (21) is designed to create a three-dimensional real-time reconstruction (23) on the basis of the video recordings;
wherein the computational unit (21) is designed to determine positions (15) in the space on the basis of the three-dimensional real-time reconstruction (23), which positions are geometrically suitable for recording images which are to underlie a three-dimensional reconstruction of the space;
wherein the computational unit (21) is designed to initiate an automatic recording of high-resolution images at the determined positions (15).

5. Measurement system according to Claim 4,
wherein the computational unit (21) is designed to create a second three-dimensional reconstruction on the basis of the high-resolution images.

6. Method for automatic three-dimensional measurement of a space (1), said method having the following steps:
generating low-resolution video recordings (31);
creating a three-dimensional real-time reconstruction (23) on the basis of the low-resolution video recordings (31);
automatically determining positions (15) in the space (1) which are geometrically suitable for recording images which are to underlie a three-dimensional reconstruction of the space, on the basis of the three-dimensional real-time reconstruction (23);
automatically recording high-resolution images at the determined positions (15).

7. Method according to Claim 6, furthermore having
outputting the three-dimensional real-time reconstruction (23) on an output unit (17);
guiding a user to the positions (15) determined for recording high-resolution images.

8. Method according to one of Claims 6 and 7, furthermore having
determining a current position of a measurement device (3), by means of which the low-resolution video recordings (31) are generated, in the space; using the current position in the three-dimensional real-time reconstruction (23);
wherein the current position of the measurement device (3) is determined with reference to reference points in the low-resolution video recordings.

9. Method according to one of Claims 6 to 8, furthermore having
creating a second three-dimensional reconstruction (25) on the basis of the high-resolution images; wherein the second three-dimensional reconstruction (25) is more accurate than the three-dimensional real-time reconstruction (23).

10. Computer program element,
wherein the computer program element is designed to execute the method according to one of Claims 6 to 9 if it is executed on a processor.

11. Computer readable medium,
wherein the program element according to Claim 10 is stored on the medium.

## Revendications

1. Dispositif de mesure (3) pour la mesure tridimensionnelle automatique d'un espace (1), le dispositif de mesure (3) présentant :
un ensemble (7) de capteurs à caméra,
l'ensemble (7) de capteurs à caméra étant configuré pour former des enregistrements vidéo à basse résolution,
l'ensemble (7) de capteurs à caméra étant configuré pour former automatiquement des images à haute résolution en des positions (15) géométriquement appropriées dans l'espace,
le dispositif de mesure étant configuré pour enregistrer automatiquement des images à haute résolution et pour exécuter une détermination automatique des positions géométriquement appropriées dans l'espace sur la base d'une reconstruction tridimensionnelle (23) en temps réel des enregistrements vidéo.

2. Dispositif de mesure (3) selon la revendication 1, présentant en outre une unité de sortie (17), l'unité de sortie (17) étant configurée pour délivrer la reconstruction tridimensionnelle (23) en temps réel, ce qui permet de réaliser un guidage permanent (35) de l'utilisateur en temps réel.

3. Dispositif de mesure (3) selon l'une des revendications 1 et 2, présentant en outre un dispositif (18, 19) de mesure de position, le dispositif (18, 19) de mesure de position étant configuré pour déterminer la distance des enregistrements vidéo et des images à haute résolution par rapport à au moins un point de référence dans l'espace.

4. Système de mesure (5) permettant la mesure tridimensionnelle automatique d'un espace (1), le système de mesure (5) présentant
un ensemble (7) de capteurs à caméra,
l'ensemble (7) de capteurs à caméra étant configuré pour former des enregistrements vidéo à basse résolution,
l'ensemble (7) de capteurs à caméra étant configuré pour former automatiquement des images à haute résolution en des positions (15) géométriquement appropriées dans l'espace,
une unité de calcul (21),
l'unité de calcul (21) étant configurée pour former une reconstruction tridimensionnelle (23) en temps réel sur la base des enregistrements vidéo,
l'unité de calcul (21) étant configurée pour, sur la base de la reconstruction tridimensionnelle (23) en temps réel, déterminer dans l'espace des positions (15) qui conviennent géométriquement pour un enregistrement d'une reconstruction tridimensionnelle de l'espace à partir des images de base,
l'unité de calcul (21) étant configurée pour lancer un enregistrement automatique d'images à haute résolution en les positions (15) ainsi définies.

5. Système de mesure (5) selon la revendication 4, dans lequel l'unité de calcul (21) est configurée pour former une deuxième reconstruction tridimensionnelle sur la base des images à haute résolution.

6. Procédé de mesure tridimensionnelle automatique d'un espace (1), le procédé présentant les étapes suivantes :
formation d'enregistrements vidéo (31) à basse résolution,
formation d'une reconstruction tridimensionnelle (23) en temps réel sur la base des enregistrements vidéo (31) à basse résolution,
détermination automatique de positions (15) qui conviennent géométriquement dans l'espace (1) pour l'enregistrement d'une reconstruction tridimensionnelle de l'espace à partir des images de base, sur la base de la reconstruction tridimensionnelle (23) en temps réel et
enregistrement automatique d'images à haute résolution en les positions (15) ainsi déterminées.

7. Procédé selon la revendication 6, présentant en outre les étapes qui consistent à :
délivrer la reconstruction tridimensionnelle (23) en temps réel sur une unité de sortie (17) et
conduire un utilisateur vers des positions (15) définies pour l'enregistrement des images à haute résolution.

8. Procédé selon l'une des revendications 6 et 7, présentant en outre les étapes qui consistent à déterminer dans l'espace la position en cours d'un dispositif de mesure (3) par lequel les enregistrements vidéo (31) à basse résolution sont produits et à utiliser la position en cours dans la reconstruction tridimensionnelle (23) en temps réel,
la détermination de la position en cours du dispositif de mesure (3) ayant lieu par rapport à des points de référence dans les enregistrements vidéo à basse résolution.

9. Procédé selon l'une des revendications 6 à 8, présentant en outre l'étape qui consiste à former une deuxième reconstruction tridimensionnelle (25) sur la base des images à haute résolution, la deuxième reconstruction tridimensionnelle (25) étant plus précise que la reconstruction tridimensionnelle (23) en temps réel.

10. Elément de programme informatique, l'élément de programme informatique étant configuré pour mettre en oeuvre le procédé selon l'une des revendications 6 à 9 lorsqu'il est exécuté sur un processeur.

11. Support lisible par ordinateur, l'élément de programme selon la revendication 10 étant conservé sur le support.
